# EUROPEAN PATENT SPECIFICATION

(11) **EP 1 491 603 B1**
(45) Date of publication and mention of the grant of the patent: **16.07.2008**
(21) Application number: 03715492.9
(22) Date of filing: 27.03.2003
(51) Int. Cl.: C09D 201/00, C09D 7/12, C09D 133/00, C09D 5/08, C08K 5/09, C08K 5/098

(54) **COATING MATERIAL AND SURFACE TREATED METAL PLATE**
BESCHICHTUNGSMATERIAL UND OBERFLÄCHENBEHANDELTE METALLPLATTE
MATIERE DE REVETEMENT ET PLAQUE METALLIQUE A SURFACE TRAITEE

(30) Priority: 01.04.2002 JP 2002098731; 01.04.2002 JP 2002098732; 14.02.2003 JP 2003037226
(43) Date of publication of application: 29.12.2004
(73) Proprietor: JFE Steel Corporation, Tokyo, 100-0011 (JP)
(72) Inventor: HIGAI, Kazuhiko, Intellectual Property Dept., Tokyo 100-0011 (JP); KYONO, Kazuaki, Intellectual Property Dept., Tokyo 100-0011 (JP)
(74) Representative: Grünecker, Kinkeldey, Stockmair & Schwanhäusser Anwaltssozietät
(86) International application number: PCT/JP2003/003812
(87) International publication number: WO 2003/083000

(56) References cited:
- JP-A- 9 156 030
- JP-A- 9 239 896
- JP-A- 9 296 132
- JP-A- 2000 038 539
- JP-A- 2000 191 976
- JP-A- 2000 327 989
- US-A1- 2001 005 549
- US-A1- 2002 028 288

## Description

### Technical Field

The present invention relates to coatings for metal sheets and tometal sheets surface treated with the coatings. Particularly, the present invention relates to a surface-treated metal sheet having superior press formability during severe ironing and an antirust property and to a coating for imparting these properties.

### Background Art

Conventionally, driving-force-transmitting parts that have complicated shapes and require strength for machinery, such as clutch guides for automatic transmissions of automobiles, are manufactured by cold forging. In recent years, however, because of the slow production speed of cold forging, such parts are becoming produced by press forming. This press forming, however, involves severe ironing; hence, the metal sheets require high press formability, in particular, high galling resistance. Accordingly, after the metal sheets are bonderized, a surface treatment that applies a metallic soap onto the bonderized metal sheets is performed. The cost of this bonderizing treatment, however, is high; therefore, various surface treatment methods are proposed in order to improve the press formability of the metal sheets instead of the bonderizing treatment.

For example, Japanese Unexamined Patent Application Publication No. 8-290520 discloses a lubricated metal material that has a lubricating film having a thickness of from 0.8 to 4 µm formed by applying and drying a treating agent which contains at least one water-soluble and/or water-dispersible acrylic resin having a glass transition point of from 10°C to 85°C, a silane coupling agent of from 0.2 to 5 percent by weight, and a metallic soap of from 0.2 to 10 percent by weight relative to the solid content of this resin. Moreover, Japanese Unexamined Patent Application Publication No. 2000-38539 discloses a lubricated metal material and an alkaline soluble coating that contains an acrylic resin and an additive, wherein the acrylic resin is a water-soluble copolymer composed of styrene, methacrylic acid ester, and a monomer having a carboxyl group, and wherein the methacrylic acid ester has a glass transition point of 0°C or more and is composed of methacrylic acid ester and an aliphatic monohydric alcohol having at least two carbon atoms. The water-soluble copolymer that is disclosed as this alkaline soluble coating has a glass transition point of up to 92°C.

Further, Japanese Unexamined Patent Application Publication No. 8-291294 discloses a lubricated metal plate and a soluble lubricating agent that contains a flexible resin, which is soluble in an alkaline aqueous solution, composed of a solid lubricant and a water-soluble or water-dispersible resin having a glass transition point of from 5°C to 100°C; and a pigment composed of oxide such as silica of from 5 to 40 percent by weight relative to the solid content of the flexible resin. Japanese Unexamined Patent Application Publication No. 3-203996 discloses an organic lubricating coating composition for use in deformation of a metal sheet including a maleic anhydride-styrene copolymer which is at least partially esterified with one or more organic hydroxyl compounds, or a salt of the esterified copolymer; and a metal sheet coated with the coating composition. In Japanese Unexamined Patent Application Publication No. 63-8489, enhancing the press formability for cold forming of a metal using a lubricant is proposed, wherein the lubricant includes a thermosetting acrylic resin, which is adjusted so as to have a glass transition point of from -10 to 25°C, of from 10 to 35 parts by weight; wax of from 3 to 15 parts by weight; a surfactant of from 0.5 to 5 parts by weight; and the balance water, and the lubricant is an aqueous solution adjusted such that the thermosetting acrylic resin and the wax have a weight ratio of from 2:1 to 12:1.

Furthermore, EP1038933A1 discloses a coating composition and a lubricated metal sheet coated with the coating to improve press formability, wherein the coating composition includes a methacrylic resin prepared by copolymerizing styrene or substituted styrene; a methacrylate ester derived from an alcohol having at least two carbon atoms and methacrylic acid; and an olefinic compound having at least one carboxyl group, wherein the molar ratio is 1:(0.05-44.5):(0.12-13), respectively.

None of the surface-treated metal sheets disclosed in Japanese Unexamined Patent Application Publication Nos. 8-290520, 2000-38539, 8-291294, and 63-8489 have a sufficient glass transition point. For example, when the surface-treated metal sheets are applied to driving-force-transmitting parts for machinery which have the ratio of decrease in sheet thickness of more than 50% at a die temperature of from 100°C to 200°C, galling or wear of the coating occurs; thus, the press formability is not sufficient. This is because the heat generated by performing severe ironing increases at the die temperature to soften the coating, which causes the die and the metal to contact easily. Consequently, galling or a marked impairment of the slidability is caused. In the technique disclosed in EP1038933A1, the copolymer also does not have a glass transition point of 100°C or more; consequently, galling or a marked impairment of the slidability is similarly caused.

Furthermore, in Japanese Unexamined Patent Application Publication No. 3-203996, a copolymer derived from a maleic anhydride and a styrene has a high glass transition point; however, the coating essentially contains a copolymer which is at least partially esterified with one or more compounds having hydroxyl groups or a salt of the esterified maleic anhydride, and the coating does not contain a lubricant. Therefore, the lubricity during severe ironing is insufficient.

The driving-force-transmitting parts for machines are usually subjected to several steps of cylindrical press forming processing followed by a groove making step as the last step, which is the most severe step. When a surface treating film wears or peels before this groove making step, rupturing or galling occurs. Therefore, it is important to ensure good wear resistance.

Press forming is generally performed by applying oil over a die and/or a metal sheet in order to suppress an increase in the die temperature. However, repeated press forming times impairs the cooling effect; hence, rupturing or galling may occur. When any of the surface-treated metal sheets disclosed in those patents described above are used under corrosive conditions, even though a rust-resistant is added, the metal sheets may rust; hence, in terms of an antirust property, there is room for improvement.

Prior art JP-A-9 156 030 discloses a coating having a glass transition point between 0 to 120°C, an acid value between 30 to 200 mg-KOH/g and Zn phosphoric acid.

Prior art US 200100 5549 A1 discloses a coating comprising metal soaps including aluminum stearate and zinc stearate. This prior art teaches that in order to solve the problem of rust prevention the glass transition temperature must be between 5 and 90°C.

The present invention is achieved in view of the above-mentioned problems. An object of the present invention is to provide a surface-treated metal sheet which has superior press formability, in particular, high galling resistance, lubricity even under severe ironing, and an antirust property. In addition, another object of the present invention is to provide a coating for manufacturing the surface-treated metal sheet, wherein the coating has superior durability, in particular, wear resistance and peel resistance.

### Disclosure of Invention

The above objects are achieved with a coating as defined in claim 1. Preferred embodiments of the inventive coating are set out in the dependent claims.

The present invention also provides a surface-treated metal sheet as defined in claim 6.

### Best Mode for Carrying Out the Invention

Preferred embodiments according to the present invention will now be explained.

The present invention provides a coating that includes a thermoplastic resin having a glass transition point of more than 100°C, an acid value of from 20 to 350 mg-KOH/g, a metallic soap of metal stearate, and an anti-galling agent. In addition, the present invention also provides a surface-treated metal sheet having a film of this coating.

The thermoplastic resin constituting the coating according to the present invention requires having a glass transition point (also referred to as Tg) of more than 100°C in order that the surface-treated metal sheet according to the present invention can ensure galling resistance and lubricity even in a high temperature environment by severe ironing. If a thermoplastic resin has a glass transition point of 100°C or less, a soft component separates from the metal sheet due to the sliding or melting by heat generated during processing. Consequently, a die is directly in contact with the metal sheet, thus causing galling or a loss of lubricity. The preferable glass transition point range of the thermoplastic resin is from more than 100°C to 250°C, and more preferably, from more than 100°C to 200°C. The term "in a high temperature environment by severe ironing" in the present invention indicates an environment that includes a ratio of decrease in sheet thickness of about 50% and a die temperature of at least 100°C or 200°C in the case of continuous processing.

The thermoplastic resin requires having an acid value of from 20 to 350 mg-KOH/g in order that the surface-treated metal sheet can ensure galling resistance and lubricity even in a high temperature environment by severe ironing. The acid value in this range has the advantage of solubilization in water of the resin itself and can ensure alkaline solubility of the film of the surface-treated metal sheet. When the acid value is less than 20 mg-KOH/g, the film adhesion of the coating is decreased, thus impairing press formability of the surface-treated metal sheet. In contrast, when the acid value is more than 350 mg-KOH/g, the antirust property of the surface-treated metal sheet is extremely deteriorated. Acid value is defined as the number of milligrams of potassium hydroxide required to neutralize the carboxyl groups in one gram of a thermoplastic resin. In the present invention, the unit of acid value is mg-KOH/g.

The coating according to the present invention, which can be either aqueous or non-aqueous, is preferably aqueous. Consequently, the thermoplastic resin described above is preferably a water-soluble resin. Resins are broadly divided into water-soluble resins and water-dispersible resins. In order to obtain a water-soluble resin, predetermined functional groups such as carboxyl groups are introduced into molecular chains of the resin to impart water-solubility to the resin. In view of a process for forming a film which is formed by each resin, the water-soluble resin can form a film by entanglement of resin molecules when water, as the solvent, is evaporated. In addition, even if a little moisture remains in the film, the film does not impair the mechanical properties of the resin itself. The water-dispersive resin is usually granular and dispersed in water by a surfactant or the like; therefore, for forming the film, coalescence of the resin particles and heating the resin above its glass transition point are required. The water-dispersible resin generally has a high molecular weight. However, the resin requires a surfactant; hence, the film strength may decrease depending on the circumstances. Accordingly, a water-soluble resin capable of film-forming simply by evaporating the solvent is preferably selected in order to form a film at low drying temperature of about from 50°C to 100°C and to keep the property of the resin having a high glass transition point.

Acrylic resins are preferably used as water-soluble resins. Among acrylic resins, a water-soluble copolymer, comprising methacrylic acid ester, styrene, acrylamide, and a monomer having a carboxyl group is suitable.

A monomeric methacrylic acid ester, such as methyl methacrylate, ethyl methacrylate, isopropyl methacrylate, n-butyl methacrylate, and isobutyl methacrylate, derived from methacrylic acid and the aliphatic monohydric alcohol is used. These methacrylic acid esters have high glass transition point, for example, relative to acrylic acid esters; hence, films have superior wear resistance during press forming. The use of a monomeric organic acid such as acrylic or methacrylic acid causes an extreme decrease in an antirust property; hence, an ester is used. This is because too many carboxyl groups in the resin causes the acid value to increase, and thus, interaction with water become too strong. The aliphatic monohydric alcohol constituting methacrylic acid ester preferably has two or more carbon atoms.

Styrene has high moisture resistance and a high glass transition point; hence, styrene achieves the effect of striking a balance between press formability and an antirust property of the surface-treated metal sheet manufactured.

The monomer having at least one carboxyl group is preferably, for example, acrylic acid, methacrylic acid, maleic acid, and itaconic acid. This carboxyl group imparts proper solubility in water to the coating which forms a lubricating film. That is, the carboxyl groups (acid radicals) are included in the copolymeric resin; therefore, the copolymeric resin is neutralized by, for example, ammonia or an amine to be capable of solubilizing in water. Hence, a water-soluble copolymer is obtained. Consequently, the entire coating has superior peel resistance and film adhesion, and can also ensure alkaline solubility of the film.

The thermoplastic resin constituting the coating according to the present invention preferably has a weight-average molecular weight of from 10,000 to 1,000,000. In cases where the molecular weight is 10,000 or more, a surface-treated metal sheet can also ensure a temporary antirust property, and further, has sufficient press formability. In cases where the molecular weight is 1,000,000 or less, the viscosity of the coating does not increase, and the coating is easily applied to the metal sheet.

This thermoplastic resin is preferably a water-soluble polymer. For example, the thermoplastic resin that includes the carboxyl groups described above is suitable. The water-soluble resin composed of a composition like this can be obtained by a known solution copolymerization method which uses a water-soluble solvent. To water-soluble solvent, such as butyl cellosolve, at 80°C to 140°C under a nitrogen atmosphere, monomers with a polymerization initiator are added dropwise for 4 to 5 hours to polymerize. Further, the mixture is heated and stirred at the same temperature for 2 to 8 hours to complete the copolymerization. Then, after cooling to 55°C to 60°C, the formed copolymer is neutralized by an alkali such as ammonia or an amine to obtain a water-soluble composition; as a result, a predetermined water-soluble resin is obtained.

Adjustments of the glass transition point and the acid value may be realized by adjusting the polymerization ratio of the material monomers. Particularly, in methacrylic acid ester, the glass transition point becomes higher as the alkyl side chain of a monomer having carboxyl groups becomes shorter; hence, an increase in their polymerization ratio allows the glass transition point of the copolymer to increase. In addition, the use of an acrylamide monomer in copolymerizing allows a glass transition point of the entire resin to increase markedly.

The metallic soap of metal stearate constituting the coating according to the present invention is a metallic soap having stearic acid residues. According to the present invention the metallic soap is selected from one of zinc stearate and aluminum stearate. The metallic soap is an inorganic lubricant which is added to the surface-treated metal sheet in order to impart lubricity and an antirust property even in a high temperature environment by severe ironing. Conventionally, an organic lubricant such as polyethylene wax is often used. In this case, the lubricant melts at 100°C or more; therefore, the lubricant cannot achieve its effect. However, adding the metallic soap of metal stearate to the coating according to the present invention ensures the wear resistance of the film made of the coating even in a high temperature environment by severe ironing and causes lubricity of the surface-treated metal sheet. Moreover, the organic lubricant has a relatively large particle size; hence, in many cases, a surfactant is used in order to ensure dispersion stability. The use of such an organic lubricant may cause discontiguous areas to occur in the dried film. Furthermore, the use of a large quantity of the organic lubricant in order to fulfill the requirement for higher lubricity may cause impaired galling resistance, if anything.

Among the metallic soaps, the metallic soap of metal stearate has a small polarity. In addition, zinc stearate has the smallest polarity among metal stearates.

A metallic soap has a layered crystal structure including metal planes, each being composed of metal atoms which are orderly arranged in a plane, and fatty acid layers arranged perpendicularly to the metal planes. This layered structure includes planes of terminal methyl radicals having low cohesive energy orderly arranged at surfaces of the crystal and adjacent layers of the crystal are in contact with each other at the corresponding plane of terminal methyl radicals; slippage occurs between the layers, resulting in lubricity of the surface-treated metal sheet. Among metallic soaps, zinc stearate has the best lubricity. Further, zinc stearate has the largest angle of contact with water among soaps; hence, zinc stearate has superior an antirust property.

The amount of addition of the metallic soap of metal stearate is preferably from 0.5 to 30 percent by weight relative to the solid content of the resin. In cases where the amount of addition is 0.5 percent by weight or more, the surface-treated metal sheet has sufficient lubricity. In cases where the amount of addition is 30 percent by weight or less, continuity of the coating film is easily ensured; therefore, the coating film preferably has wear resistance.

Most preferably, the coating according to the present invention includes zinc stearate as a metallic soap of metal stearate; and a water-soluble copolymer having a weight-average molecular weight of from 10,000 to 1,000,000 and carboxyl groups as a thermoplastic resin in order to impart press formability and an antirust property to the surface-treated metal sheet.

The anti-galling agent according to the present invention includes an inorganic compound having lubricity and imparts film-wear resistance to the coating according to the present invention and galling resistance to the surface-treated metal sheet in a high temperature environment by severe ironing.

Such anti-galling agents include at least one selected from the group consisting of zinc salts, magnesium salts, calcium salts, and ammonium salts of phosphoric acids, molybdic acids, and phosphomolybdic acids.

The amount of addition of the anti-galling agent is preferably from 0.5 to 40 percent by weight relative to the solid content of the resin. In the event that the amount of addition is 0.5 percent by weight or more, sufficient film-wear resistance of the coating is easily maintained, and the surface-treated metal sheet has high galling resistance. In the event that the amount of addition is 40 percent by weight or less, the lubricity of the surface-treated metal sheet is easily maintained.

Besides these additives, an organic lubricant may be added.

The organic lubricant is added to ensure lubricity at room temperature. That is, in the event that a resin has the high glass transition point, although the wear resistance of the coating film is ensured at room temperature environment, the coefficient of kinetic friction during press forming becomes high relative to that in a high temperature environment during severe ironing. In the event that the press conditions change at the start and end of press forming to range widely from room to high temperature, the lubricity at room temperature is preferably ensured by the organic lubricant. The coating preferably contains this organic lubricant, which is one selected from the group consisting of polyethylene and fluorine wax, which have a melting point of 100°C or more, wherein the organic-lubricant content is from 0.5 to 5 percent by weight relative to the thermoplastic resin. In the case of a melting point of 100°C or more, the lubricity of the surface-treated metal sheet is easily maintained at room temperature, and the coating film does not soften even in a high temperature; hence, the press formability of the surface-treated metal sheet is easily maintained. Regarding the amount of the addition of the organic lubricant, in the case of 0.5 percent by weight or more, the lubricity of the surface-treated metal sheet is easily maintained at room temperature; and in the case of 5 percent by weight, the coating film does not soften even in a high temperature; hence, the press formability of the surface-treated metal sheet is easily maintained.

Furthermore, according to the present invention a dry accelerator is added as another additive.

The dry accelerator can efficiently dry the surface-treated metal sheet to increase the film thickness; thus, the dry accelerator has the effect of improving the performance of the film. The coating preferably contains this dry accelerator which is at least one selected from the group consisting of amines and alcohols which have a boiling point of from 30°C to 250°C. In the case of a boiling point of 30°C or more, the coating stability does not decrease. In the case of a boiling point of 250°C or less, it is difficult to keep the amines and the alcohols are in the coating film; therefore, the antirust property is preferably maintained. By the same token, the amount of addition of the dry accelerator preferably ranges from one to five percent by weight relative to the resin. In the case of one percent by weight or more, an improvement of the drying properties of the coating is easily observed. In the case of five percent by mass or less, it is difficult to keep the amines and the alcohols; therefore, the antirust property of the surface-treated metal sheet is preferably maintained.

Next, the surface-treated metal sheet according to the present invention is further described in detail. The present invention provides the surface-treated metal sheet having the lubricity-provided film formed by applying any coating described above on the metal sheet followed by drying. The coating according to the present invention is preferably applied and dried such that the coating amount per unit surface area of the metal sheet is from 0.5 to 7.0 g/m² in dry weight. The film is preferably formed on both sides of the metal sheet in view of improvement of press formability.

The metal sheet is not specifically limited. As examples of the metal sheets, there may be mentioned hot-rolled steel sheets, cold-rolled steel sheets, stainless steel sheets, and metal sheets treated by conventional chemical treatment such as plating. The coating according to the present invention is preferably applied to such steel sheets. In that case, the coating amount per unit surface area is preferably from 0.5 to 7.0 g/m² in dry weight. That is, in the case of 0.5 g/m² or more, bumps and dips in the steel sheet are leveled to improve the press formability of the surface-treated steel sheet. In the case of 7.0 g/m² or less, the film is easily dried to easily achieve high galling resistance by softening the film. More preferable, the range is from 1.0 to 5. 0 g/m². The metal sheets include metal strips which are metal sheets in the form of strips.

Application of the coating may use available known methods, such as roller coating, spray coating, dip coating, and brush coating. The paint is dried at a steel-sheet temperature of about 50°C to 150°C for a dying time of about 1 to 90 seconds.

### EXAMPLE

Both surfaces of individual degreased metal strips (sheet thickness 1.2 mm) had the coating compositions listed in Table 1 applied thereto. Each coating weight in a dry state was adjusted to be 3.0 g/m² per unit surface area and the film was dried by a hot-blast dryer so that the temperature of the sheet reached 60°C in 5 seconds. Test pieces were prepared by coating 1.5 g/m² of anti-rust oil (16.0 cSt/40°C) on both surfaces.

The lubricity, wear resistance, press formability, a temporary antirust property, and alkaline solubility of the film were investigated for each test piece thus obtained. Only the drying property of each film was investigated by a hot-blast of 90°C for two seconds. The results are shown in Table 2. The characteristics were measured in the following ways.

### (1) Lubricity

The initial coefficient of kinetic friction was measured using a Bowden tester under the following conditions. Curvature of spherical tipped indenter: 4.8 mmR

| | |
|---|---|
| Sliding speed: | 3.9 mm/sec |
| Sliding distance: | 26 mm |
| Pressing load: | 3 kgf |

Evaluation temperature: room temperature (25°C) and high temperature (150°C)

### (2) Wear Resistance

Repetition sliding was performed using a Bowden Tester under the following conditions. The carbon count in the sliding area about 100 times sliding was measured by electron probe microanalysis (EPMA), and the residual ratio of the film (percent) was calculated. Curvature of spherical tipped indenter:4.8 mmR

| | |
|---|---|
| Sliding speed: | 3.9 mm/sec |
| Sliding distance: | 26 mm |
| Pressing load: | 3 kgf |
| Evaluation temperature: | 150°C |

The Evaluation criteria are described below.
A: Residual ratio of the film 100-90%
B: Residual ratio of the film 90-70%
C: Residual ratio of the film less than 70%

### (3) Galling Resistance

Galling resistance in press forming was measured under the following conditions with an Erichsen cup drawing tester.

| | |
|---|---|
| Punch diameter: | 33 mm φ |
| Drawing dice shoulder curvature: | 2 mmR |
| Dice clearance: | 0.6 mm |
| Blank diameter: | 68 mm φ |
| Drawing speed: | 10 mm/sec |
| Blank holding force: | 1 ton |
| Die temperature in forming: | 120°C |

The presence or absence of galling was evaluated by the observation of side walls of each sample, which were evaluated for their deep-drawing properties under the conditions described above.

The evaluation criteria are described below.
A: No galling (Excellent)
B: Slight galling (Good)
C: Relatively high galling (No good)
D: High galling (Poor)

### (4) Temporary Antirust Property

A salt splay test (SST) was performed according to Japan Industrial Standard (JIS) Z2371 and then the ratio of the area occupied by white or red rust after 24 hours was measured.

The evaluation criteria are described below.

| | |
|---|---|
| A: Area ratio | less than 5% |
| B: Area ratio | 5-50% |
| C: Area ratio | more than 50% |

### (5) Alkaline solubility of the Film

Each test piece was degreased by spraying a degreasing solution, which was adjusted so as to have a concentration of three percent by weight and a solution temperature of 40°C (Fine Cleaner 4460 manufactured by Nihon Parkerizing Co., Ltd.), for 10 seconds at a spraying pressure of 1 kgf/cm². The carbon count in the degreased face of each test piece was measured by X-ray fluorescence spectroscopy; the dissolving ratio of the film was calculated by the carbon count before coating and degreasing.

The evaluation criteria are described below.
A: Dissolving ratio of the film in an alkali solution 100%
B: Dissolving ratio of the film in an alkali solution 99 to 95%
C: Dissolving ratio of the film in an alkali solution less than 95%

### (6) Drying property

Both surfaces of individual degreased metal strips (sheet thickness 1.2 mm) had the coating compositions listed in Table 1 applied thereto. Each coating weight in a dry state was adjusted to be 3.0 g/m² per unit surface area and the film was dried by a hot-blast having a temperature of 90°C for two seconds; then, the drying property of each film was evaluated by touch. The evaluation criteria are described below.
A: No sticky
B: Sticky

**Table 1-1**

| No. | Kind of metal sheet | Resin | | | | Metallic soap of metal stearate (Content*1) | Anti-galling agent (Content*1) | Organic lubricant | | Dry accelarator (Content*1) | Remarks |
|---|---|---|---|---|---|---|---|---|---|---|---|
| | | Polymer composition | Tg (°C) | Acid value (mg-KOH/g) | Molecular weight | | | (Content*1) | Melting point (°C) | | |
| 1 | Hot-rolled steel sheet | Styrene/Methyl methacrylate /Methacrylic acid | 120 | 160 | 50000 | Zinc stearate (3) | Zinc phosphate (20) | - | - | Ethyl alcohol (1) | Inventive example |
| 2 | Pickled hot-rolled steel sheet | Styrene/Methyl methacrylate /Methacrylic acid | 120 | 200 | 50000 | Zinc stearate (2) | Zinc phosphate (20) | - | - | Ethyl alcohol (1) | Inventive example |
| 3 | Cold-rolled steel sheet | Styrene/ Acrylamide /Methacrylic acid | 120 | 200 | 50000 | Zinc stearate (2) | Zinc phosphate (20) | - | - | Ethyl alcohol (1) | Inventive example |
| 4 | Hot-dip galvanized steel sheet | Styrene/Methyl methacrylate /Methacrylic acid | 120 | 200 | 50000 | Zinc stearate (2) | Zinc phosphate (20) | - | - | Ethyl alcohol (1) | Inventive example |
| 5 | Electrogalvanized steel sheet | Styrene/Methyl methacrylate /Methacrylic acid | 120 | 200 | 50000 | Zinc stearate (2) | Zinc phosphate (20) | - | - | Ethyl alcohol (1) | Inventive example |
| 6 | Stainless steel sheet | Styrene/Methyl methacrylate /Methacrylic acid | 120 | 200 | 50000 | Zinc stearate (2) | Zinc phosphate (20) | - | - | Ethyl alcohol (1) | Inventive example |
| 7 | Pickled hot-rolled steel sheet | Styrene/Isobutyl methacrylate /Methacrylic acid | 110 | 150 | 40000 | Zinc stearate (30) | Zinc phosphate (30) | - | - | - | Comparative example |
| 8 | Pickled hot-rolled steel sheet | Methyl methacrylate /Methacrylic acid | 120 | 130 | 40000 | Zinc stearate (3) | Zinc phosphate (20) | - | - | - | Comparative example |

| | | | | | | | | | | | |
|---|---|---|---|---|---|---|---|---|---|---|---|
| *1: Content is represented by percent by mass relative to a resinoid solid content. | | | | | | | | | | | |

**Table 1-2**

| No. | Kind of metal sheet | Resin | | | | Metallic soap of metal stearate (Content*1) | Anti-galling agent (Content*1) | Organic lubricant | | Dry accelarator (Content*1) | Remarks |
|---|---|---|---|---|---|---|---|---|---|---|---|
| | | Polymer composition | Tg (°C) | Acid value (mg-KOH/g) | Molecular weight | | | (Content*1) | Melting point | | |
| 9 | Pickled hot-rolled steel sheet | Styrene/ Acrylamide /Acrylic acid | 140 | 160 | 60000 | Zinc stearate (5) | Zinc molybdophosphate (20) | Polyethylene wax (2) | 124 | Diethylamine (1) | Inventive example |
| 10 | Pickled hot-rolled steel sheet | Styrene/ Acrylamide/ Acrylic acid | 140 | 160 | 60000 | Zinc stearate (1) | Zinc phosphate (3) | Polyethylene wax (1) | 124 | Diethylamine (1) | Inventive example |
| 11 | Pickled hot-rolled steel sheet | Styrene/ Acrylamide /Methacrylic acid | 150 | 120 | 60000 | Zinc stearate (20) | Calcium molybdophosphate (40) | Polyethylene wax (10) | 124 | Diethylamine (1) | inventive example |
| 12 | Pickled hot-rolled steel sheet | Styrene/Isobutyl methacrylate /Methacrylic acid | 110 | 150 | 60000 | Zinc stearate (30) | Zinc phosphate (30) | Polyethylene wax (2) | 124 | Diethylamine (1) | Inventive example |
| 13 | Pickled hot-rolled steel sheet | Methyl methacrylate /Methacrylic acid | 120 | 130 | 60000 | Zinc stearate (3) | Zinc phosphate (20) | Fluorine wax (1) | 150 | Diethylamine (1) | Inventive example |
| 14 | Pickled hot-rolled steel sheet | Styrene/Methyl methacrylate /Methacrylic acid | 120 | 250 | 80000 | Sodium stearate (5) | Calcium Phosphate (10) | - | - | - | Comparative example |
| 15 | Pickled hot-rolled steel sheet | Styrene/Methyl methacrylate /Methacrylic acid | 100 | 100 | 80000 | Calcium stearate (3) | Zinc phosphate (30) | - | - | - | Comparative example |
| 16 | Pickled hot-rolled steel sheet | Styrene | 100 | 0 | 60000 | Zinc stearate (3) | Zinc phosphate (20) | - | - | Diethylamine (2) | Comparative example |

| | | | | | | | | | | | |
|---|---|---|---|---|---|---|---|---|---|---|---|
| *1: Content is represented by percent by mass relative to a resinoid solid content. | | | | | | | | | | | |

**Table 1-3**

| No. | Kind of metal sheet | Resin | | | | Metallic soap of metal stearate (Content*1) | Anti-galling agent (Content*1) | Organic lubricant (Content*1) Melting point (°C) | | Dry accelarator (Content*1) | Remarks |
|---|---|---|---|---|---|---|---|---|---|---|---|
| | | Polymer composition | Tg (°C) | Acid value (mg-KOH/g) | Molecular weight | | | | | | |
| 17 | Pickled hot-rolled steel sheet | n-Butyl methacrylate /Methacrylic acid | 40 | 100 | 60000 | Zinc stearate (3) | Zinc phosphate (20) | - | | Diethylamine (2) | Comparative example |
| 18 | Pickled hot-rolled steel sheet | Styrene/Methyl methacrylate /Methacrylic acid | 120 | 160 | 60000 | - | Zinc phosphate (20) | - | - | Diethylamine (2) | Comparative example |
| 19 | Pickled hot-rolled steel sheet | Styrene/Methyl methacrylate /Methacrylic acid | 120 | 160 | 60000 | Zinc stearate (3) | - | - | - | Diethylamine (2) | Comparative example |
| 20 | Pickled hot-rolled steel sheet | Application of metallic soap after bonderizing | - | - | - | - | - | - | - | Diethylamine (2) | Comparative example |
| 21 | Pickled hot-rolled steel sheet | Styrene/Methyl methacrylate /Methacrylic acid | 120 | 250 | 80000 | Sodium stearate (5) | Calcium phosphate (10) | Polyethylene wax(2) | 115 | Diethylamine (2) | Comparative example |
| 22 | Pickled hot-rolled steel sheet | Styrene/Methyl methacrylate /Methacrylic acid | 100 | 100 | 80000 | Calcium stearate (3) | Zinc phosphate (30) | Polyethylene wax | 115 | Diethylamine (2) | Comparative example |
| 23 | Pickled hot-rolled steel sheet | Styrene/ Acrylamide/ Acrylic acid | 150 | 200 | 80000 | Aluminum stearate (20) | Zinc phosphate (20) | Polyethylene wax (2) | 115 | Diethylamine (2) | Inventive example |
| 24 | Pickled hot-rolled steel sheet | Styrene/Methyl methacrylate/ Methacrylic acid | 100 | 100 | 5000 | Calcium stearate (3) | Zinc phosphate (30) | - | - | - | Comparative example |

| | | | | | | | | | | | |
|---|---|---|---|---|---|---|---|---|---|---|---|
| *1: Content is represented by percent by mass relative to a resinoid solid content. | | | | | | | | | | | |

**Table 1-4**

| No. | Kind of metal sheet | Resin | | | | Metallic soap of metal stearate (Content*1) | Anti-galling agent (Content*1) | Organic lubricant | | Dry accelarator (Content*1) | Remarks |
|---|---|---|---|---|---|---|---|---|---|---|---|
| | | Polymer composition | Tg (°C) | Acid value (mg-KOH/g) | Molecular weight | | | (Content*1) | Melting point (°C) | | |
| 25 | Hot-rolled steel sheet | Styrene/Methyl methacrylate/ Methacrylic acid | 120 | 160 | 60000 | Zinc stearate (3) | Zinc phosphate (20) | Polyethylene wax (1) | 115 | Diethylamine (2) | Inventive example |
| 26 | Pickled hot-rolled steel sheet | Styrene/Methyl methacrylate/ Methacrylic acid | 120 | 200 | 60000 | Zinc stearate (2) | Zinc phosphate (20) | Polyethylene wax (1) | 115 | Diethylamine (3) | Inventive example |
| 27 | Cold-rolled steel sheet | Styrene/Methyl methacrylate/ Methacrylic acid | 120 | 200 | 80000 | Zinc stearate (2) | Zinc phosphate (20) | Polyethylene wax (2) | 124 | Diethylamine (2) | Inventive example |
| 28 | Hot-dip galvanized steel sheet | Styrene/Methyl methacrylate/ Methacrylic acid | 120 | 200 | 50000 | Zinc stearate (2) | Zinc phosphate (20) | Polyethylene wax (2) | 124 | Butylamine (2) | Inventive example |
| 29 | Electrogalvanized steel sheet | Styrene/Methyl methacrylate/ Methacrylic acid | 120 | 200 | 50000 | Zinc stearate (2) | Zinc phosphate (20) | Polyethylene wax (1) | 115 | Butylamine (2) | Inventive example |
| 30 | Stainless steel sheet | Styrene/Methyl methacrylate/ Methacrylic acid | 120 | 200 | 80000 | Zinc stearate (2) | Zinc phosphate (20) | Polyethylene wax (1) | 115 | Butylamine (2) | Inventive example |
| 31 | Pickled hot-rolled steel sheet | Styrenè/Isobutyl methacrylate/ Methacrylic acid | 110 | 150 | 80000 | Zinc stearate (30) | Zinc phosphate (30) | Polyethylene wax | 115 | Butylamine (2) | Inventive example |
| 32 | Pickled hot-rolled steel sheet | Methyl methacrylate/ Methacrylic acid | 120 | 130 | 80000 | Zinc stearate (3) | Zinc phosphate (20) | Polyethylene wax (1) | 124 | Diethylamine (2) | Inventive example |

| | | | | | | | | | | | |
|---|---|---|---|---|---|---|---|---|---|---|---|
| *1: Content is represented by percent by mass relative to a resinoid solid content. | | | | | | | | | | | |

**Table 2-1**

| No | Lubricity (Initial coefficient of kinetic friction) | | Wear resistance | Anti-galling property | Temporary antirust property | Alkaline solubility of film | Drying property | Remarks |
|---|---|---|---|---|---|---|---|---|
| | High temperature | Room temperature | | | | | | |
| 1 | 0.03 | 0.08 | A | A | A | A | A | Inventive example |
| 2 | 0.03 | 0.08 | A | A | A | A | A | Inventive example |
| 3 | 0.03 | 0.08 | A | A | A | A | A | Inventive example |
| 4 | 0.03 | 0.09 | A | A | A | A | A | Inventive example |
| 5 | 0.03 | 0.08 | A | A | A | A | A | Inventive example |
| 6 | 0.03 | 0.08 | A | A | A | A | A | Inventive example |
| 7 | 0.03 | 0.08 | A | A | A | A | B | Comparative example |
| 8 | 0.03 | 0.07 | A | A | A | A | B | Comparative example |
| 9 | 0.03 | 0.04 | A | A | A | A | A | Inventive example |
| 10 | 0.03 | 0.04 | A | A | A | A | A | Inventive example |
| 11 | 0.03 | 0.04 | A | A | A | A | A | Inventive example |
| 12 | 0.03 | 0.04 | A | A | A | A | A | Inventive example |
| 13 | 0.03 | 0.04 | A | A | A | A | A | Inventive example |
| 14 | 0.06 | 0.06 | A | A | A | A | B | Comparative example |
| 15 | 0.06 | 0.06 | A | A | A | A | B | Comparative example |
| 16 | 0.03 | 0.08 | A | A | A | B | A | Comparative example |

**Table 2-2**

| No | Lubricity (Initial coefficient of kinetic friction) | | Wear resistance | Anti-galling property | Temporary antirust property | Alkaline solubility of film | Drying property | Remarks |
|---|---|---|---|---|---|---|---|---|
| | High temperature | Room temperature | | | | | | |
| 17 | 0.20 | 0.07 | C | D | B | A | A | Comparative example |
| 18 | 0.10 | 0.08 | C | D | B | A | A | Comparative example |
| 19 | 0.03 | 0.08 | C | D | A | A | A | Comparative example |
| 20 | 0.05 | 0.08 | A | A | A | B | A | Comparative example |
| 21 | 0.03 | 0.08 | A | B | A | A | A | Comparative example |
| 22 | 0.06 | 0.03 | A | B | A | A | A | Comparative example |
| 23 | 0.03 | 0.03 | A | A | A | A | A | Inventive example |
| 24 | 0.08 | 0.08 | B | C | B | A | B | Comparative example |
| 25 | 0.03 | 0.03 | A | A | A | A | A | Inventive example |
| 26 | 0.03 | 0.03 | A | A | A | A | A | Inventive example |
| 27 | 0.03 | 0.03 | A | A | A | A | A | Inventive example |
| 28 | 0.05 | 0.05 | A | A | A | A | A | Inventive example |
| 29 | 0.03 | 0.03 | A | A | A | A | A | Inventive example |
| 30 | 0.03 | 0.03 | A | A | A | A | A | Inventive example |
| 31 | 0.02 | 0.03 | A | A | A | A | A | Inventive example |
| 32 | 0.02 | 0.02 | A | A | A | A | A | Inventive example |

### Industrial Applicability

A coating according to the present invention has superior durability of a film, in particular, wear resistance and peel resistance. A surface-treated metal sheet having a film formed by applying the coating has a performance capable of alternative a bonderized material. That is, the surface-treated metal sheet has superior press formability, in particular, galling resistance and lubricity even in a high temperature environment caused by severe ironing. Further, the surface-treated metal sheet has superior alkaline solubility of the film and a temporary antirust property. Driving-force-transmitting parts that have complicated shapes and require strength for machinery, such as clutch guides for automatic transmissions of automobiles are efficiently produced. Accordingly, the present invention can make a significant contribution to industry.

## Claims

1. A coating comprising a thermoplastic resin having a glass transition point of more than 100°C and an acid value of from 20 to 350 mg-KOH/g, a metallic soap selected from one of zinc stearate and aluminum stearate, an anti-galling agent, and a dry accelerator.

2. The coating according to claim 1, wherein the thermoplastic resin has a weight-average molecular weight of from 10,000 to 1,000,000 and is a water-soluble polymer.

3. The coating according to claim 1, wherein the anti-galling agent comprises at least one selected from the group consisting of zinc salts, magnesium salts, calcium salts, and ammonium salts of phosphoric acids, molybdic acids, and phosphomolybdic acids.

4. The coating according to claim 1, wherein the anti-galling agent is contained in an amount of 0.5 to 40 percent by mass.

5. The coating according to claim 1, further comprising an organic lubricant in an amount of 0.5 to 10 percent by mass.

6. A surface-treated metal sheet having the film of coating according to any one of claims 1 to 5.

## Patentansprüche

1. Beschichtung, die ein Thermoplastharz, das einen Glasübergangspunkt von über 100 °C und einen Säurewert zwischen 20 und 350 mg-KOH/g hat, eine Metall-Seife, die aus Zink-Stearat und Aluminium-Stearat ausgewählt wird, sowie ein Fressverhütungsmittel und ein Trocknungsbeschleunigungsmittel umfasst.

2. Beschichtung nach Anspruch 1, wobei das Thermoplastharz ein massegemittelte Molekülmasse zwischen 10.000 und 1.000.000 hat und ein wasserlösliches Polymer ist.

3. Beschichtung nach Anspruch 1, wobei das Fressverhütungsmittel wenigstens eine der Verbindungen umfasst, die aus der Gruppe ausgewählt werden, die aus Zinksalzen, Magnesiumsalzen, Kalziumsalzen, und Ammoniumsalzen von Phosphorsäuren, Molybdänsäuren und Phosphormolybdänsäuren besteht.

4. Beschichtung nach Anspruch 1, wobei das Fressverhütungsmittel in einer Menge zwischen 0,5 und 40 Gew.-% enthalten ist.

5. Beschichtung nach Anspruch 1, die des Weiteren ein organisches Schmiermittel in einer Menge von 0,5 bis 10 Gew.-% umfasst.

6. Oberflächenbehandeltes Blech, das den Film aus der Beschichtung nach einem der Ansprüche 1 bis 5 aufweist.

## Revendications

1. Revêtement comprenant une résine thermoplastique ayant un point de transition vitreuse de plus de 100°C et un indice d'acide de 20 à 350 mg-KOH/g, un savon métallique sélectionné entre le stéarate de zinc et le stéarate d'aluminium, un agent anti-grippant, et un accélérateur de séchage.

2. Revêtement selon la revendication 1, dans lequel la résine thermoplastique a un poids moléculaire moyen en poids de 10 000 à 1 000 000, et est un polymère hydrosoluble.

3. Revêtement selon la revendication 1, dans lequel l'agent anti-grippant comprend au moins un élément sélectionné dans le groupe constitué des sels de zinc, des sels de magnésium, des sels de calcium et des sels d'ammonium d'acides phosphoriques, d'acides molybdiques et d'acides phosphomolybdiques.

4. Revêtement selon la revendication 1, dans lequel l'agent anti-grippant est contenu en une quantité de 0,5 à 40 % en masse.

5. Revêtement selon la revendication 1, comprenant en outre un lubrifiant organique en une quantité de 0,5 à 10 % en masse.

6. Feuille de métal traitée en surface, comportant le film de revêtement selon l'une quelconque des revendications 1 à 5.
